# EUROPÄISCHE PATENTANMELDUNG

(11) **EP 1 273 909 A1**
(43) Veröffentlichungstag der Anmeldung: **08.01.2003**
(21) Anmeldenummer: 01116496.9
(22) Anmeldetag: 06.07.2001
(51) Int. Cl.: G01N 27/22, G01N 27/12

(54) **Sensor**

(71) Anmelder: Moletherm Holding AG, 4502 Solothurn (CH)
(72) Erfinder: Reichelt, Helmut, 01069 Dresden (DE)
(74) Vertreter: Neubauer, Hans-Jürgen, Dipl.-Phys.

(57) **Zusammenfassung**

Die Erfindung betrifft einen Sensor (1) insbesondere zur Konzentrationsermittlung eines im Sensorbereich anwesenden gasförmigen oder flüssigen oder dampfförmigen Mediums mit einen auf einen Träger (2) aufgebrachten Sensormaterial (2). Dieses besteht aus einem Bindemittelmaterial, welches eine poröse Gitterstruktur für ein Eindiffundieren des Mediums aufweist, wobei sich dadurch konzentrationsabhängig und reversibel die Gitterstruktur in seiner Geometrie verändert. Im Sensormaterial sind elektrisch leitende Kohlenstoffpartikel (15) verteilt enthalten, die die elektrischen Eigenschaften des Sensormaterials im wesentlichen bestimmen und deren Lage bei einer konzentrationsabhängigen Gitterstrukturveränderung ebenfalls verändert wird. Dadurch ändern sich entsprechend die elektrischen Eigenschaften des Sensormaterials, die als Sensorsignal mit einer elektrischen Messeinrichtung (8) messbar sind.

## Beschreibung

Die Erfindung betrifft einen Sensor zur Ermittlung der Anwesenheit oder der Konzentration eines im Sensorbereich anwesenden gasförmigen oder flüssigen oder dampfförmigen Mediums und/oder für weitere physikalische Größen nach dem Oberbegriff des Anspruchs 1.

Sensoren werden als Istwertgeber für Regelungen, Steuerungen und Anzeigen von Drucken, Temperaturen, Medienkonzentrationen, Füllständen, etc. in vielen unterschiedlichen Ausführungsformen mit unterschiedlichen Wirkprinzipien eingesetzt. Wesentliche Anforderungen an solche Sensoren bestehen in einer hohen Funktionssicherheit mit gut reproduzierbaren Sensorausgangswerten, die für eine Weiterverarbeitung unmittelbar als elektrische Signale vorliegen sollen oder in elektrische Signale einfach umsetzbar sein sollen. Weitere Anforderungen betreffen eine möglichst hohe Messgenauigkeit sowie einfache und kostengünstige Herstellmöglichkeiten und eine einfache Montage und Wartung.

Ein bekannter flüssigkeitsempfindlicher Sensor insbesondere in der Verwendung als Regensensor, ist aus der DE 32 46 412 C1 bekannt. Dabei ist auf einer Trägerplatte aus elektrisch isolierendem Material ein Sensormaterial aufgebracht, das aus einem Bindemittel mit darin verteilt enthaltenen leitfähigen Teilchen wie Ruß oder Graphit besteht. Dieses Material bildet eine Heizschicht auf der zwei miteinander kämmende Elektrodenstrukturen aus einem niederohmigen rußhaltigen Material aufgebracht sind. Gelangt eine elektrisch leitende Flüssigkeit in den Bereich dieser Struktur so wird der zuvor hochohmige Widerstand zwischen den Elektroden erniedrigt und diese Erniedrigung kann z. B. zu Anzeige von Regen ausgenutzt werden.

Ein solcher Regensensor erlaubt nur eine sehr einfache Feststellung, ob dessen Oberfläche durch eine elektrisch leitende Flüssigkeit benetzt ist oder nicht. Konzentrationsmessungen von Medien oder Messungen anderer physikalischer Größen sind mit einem solchen Regensensor nicht möglich, so dass dessen Einsatz auf eine Benetzung mit einer elektrisch leitenden Flüssigkeit beschränkt ist.

Aufgabe der Erfindung ist es, einen einfach herstellbaren für unterschiedliche Einsatzfälle dimensionierbaren und anpassbaren Sensor mit guter Funktion zur Verfügung zu stellen.

Diese Aufgabe wird mit den Merkmalen des Anspruchs 1 gelöst.

Gemäß Anspruch 1 ist auf einem Träger aus elektrisch isolierendem Material ein Sensormaterial aufgebracht, welches aus einem im wesentlichen elektrisch isolierenden Bindemittelmaterial und darin verteilt enthaltenen elektrisch leitenden Kohlenstoffpartikeln besteht.

Das Bindemittelmaterial weist eine poröse Gitterstruktur für ein Eindiffundieren eines im Sensorbereich anwesenden gasförmigen oder flüssigen oder dampfförmigen Mediums auf mit einer von der Konzentration des eindiffundierten Mediums reversibel abhängigen Gitterstrukturvergrößerung oder Gitterstrukturverkleinerung. Am Sensormaterial sind zudem zwei beabstandete elektrische Anschlüsse angebracht, die mit einer elektrischen Messeinrichtung für einen elektrischen Widerstand und/oder eine elektrische Induktivität und/oder eine elektrische Kapazität verbunden sind.

Die Konzentration des in die Gitterstruktur eindiffundierten Mediums ist nach einer gewissen Ansprechzeit des Sensors proportional zur Konzentration des Mediums in der Sensorumgebung, so dass die eindiffundierte Konzentration ein Maß für die Umgebungskonzentration darstellt. Die eindiffundierte Konzentration bewirkt wiederum eine konzentrationsabhängig reversible Gitterstrukturveränderung, wobei insbesondere eine größere eindiffundierte Konzentration eine Gitterstrukturvergrößerung entsprechend einem Aufquellen des Gitters bei einer Flüssigkeitseindiffusion entspricht. Eine solche Strukturvergrößerung bei höheren eindiffundierten Medienkonzentrationen führt dazu, dass die zur elektrischen Leitfähigkeit des Sensormaterials wesentlich beitragenden leitenden Kohlenstoffpartikel im Mittel weiter auseinanderrücken. Somit ist auch die durch die im Bindemittel verteilt eingebetteten Kohlenstoffpartikel gebildete Gitterstruktur bei steigender eindiffundierten Mediumkonzentration vergrößert und aufgeweitet. Zudem haben die Kohlenstoffpartikel selbst einen Gitteraufbau, wie beispielsweise eine Graphit-Gitterstruktur. Dieser Gitteraufbau wird durch eine eindiffundierte Mediumkonzentration, insbesondere durch damit geänderte Druckverhältnisse beeinflusst, was zu Verschiebungen im Gitteraufbau führt. Diese Effekte bewirken eine reversible, reproduzierbare Veränderung der elektrischen Eigenschaften des Sensormaterials, die mit der angeschlossenen Messeinrichtung erfassbar sind, wobei das Messsignal als Sensorsignal proportional zu der eindiffundierten und der umgebenden Mediumkonzentration ist.

Je nach dem gewählten Bindemittelmaterial handelt es sich um eine mehr oder weniger regelmäßige poröse und/oder spongiose Gitterstruktur mit entsprechender Gitterstruktur der eingebetteten Kohlenstoffpartikel. Die Abhängigkeit des Messsignals von der Mediumkonzentration ist daher oft nicht exakt linearproportional, so dass an sich bekannte Kalibrierungen für eine Zuordnung zwischen Messsignal und Mediumkonzentration erforderlich sind.

Sensoren, die eine solche elektrisch messbare Veränderung einer Gitterstruktur bzw. einer Gitterweite ausnützen, können unter Verwendung verschiedener Materialien für eine Vielzahl von Anwendungsfällen hergestellt werden. Die Herstellung ist einfach und preisgünstig. Der Aufbau ist zudem robust und gegen mechanische Einflüsse relativ stabil.

Bei einer besonders bevorzugten Ausführungsform nach Anspruch 2 weist der Träger eine ebene Fläche auf, wobei er insbesondere aus einem dünnen stabilen Isolierstoffblättchen bestehen kann. Darauf ist das Sensormaterial als dünne Sensorschicht aufgetragen. Die Sensorschicht hat somit eine große für eine Eindiffusion eines Mediums zur Verfügung stehende Fläche bei kleiner Schichtdicke was zu einer vorteilhaft kurzen Ansprechzeit des Sensors und zu einer geringen Betriebsträgheit führt. Zweckmäßig sind die elektrischen Anschlüsse bei dieser Ausführung randseitig an der Sensorschicht jeweils gegenüberliegend durch elektrische Leiterbänder gebildet.

Eine besonders gute Sensorfunktion wird nach Anspruch 3 erhalten, wenn als Kohlenstoffpartikel Graphitpartikel mit einer Partikelgröße von 5µm bis 20 µm verwendet werden. Eine optimale Konzentration der Graphitpartikel im Bindemittel kann zweckmäßig so hoch gewählt werden, dass zumindest ein Teil der Graphitpartikel aneinandergrenzen.

Als Bindemittel stehen unterschiedliche Substanzen zur Verfügung, welche eine Gitterstruktur bilden, die beim Eindiffundieren eines Mediums ihre geometrische Struktur ändert. Beispielsweise sind nach Anspruch 4 als Bindemittel Kaseine gut verwendbar. Nach Anspruch 5 können als Bindemittel auch Acrylate verwendet werden und nach Anspruch 6 stehen als Bindemittel auch Peptide zur Verfügung. Da die Funktion des Sensors durch die veränderliche Gitterstruktur in Verbindung mit den eingebetteten Kohlenstoffpartikeln gegeben ist, bestimmen der Grad der Gitterstrukturveränderung und die Konzentration der Kohlenstoffpartikel die Art und Größe des Sensorsignals, so dass hier vorteilhaft Dimensionierungs- und Anpassmöglichkeiten an unterschiedliche Gegebenheiten und Einsatzfälle liegen, die ggf. auf einfache Weise durch Versuche zu ermitteln sind.

Ein Anwendungsfall des Sensors ist mit Anspruch 7 angegeben, wobei der Sensor in der Art eines Füllstandsensors mit einem Teil seines Sensormaterials unter einen Flüssigkeitsspiegel eintauchbar ist. Bei einer Veränderung des Flüssigkeitsspiegels bezüglich des ortsfesten Füllstandssensors ändert sich der Flächenanteil des eingetauchten Sensormaterials, so dass sich dadurch auch die eindiffundierte Flüssigkeitskonzentration bezogen auf das gesamte Sensormaterial ändert, was wiederum als Füllstandssignal elektrisch messbar ist. Es kann auch lediglich das Vorhandensein einer Flüssigkeit am Sensormaterial in einer digitalen Aussage messtechnisch erfasst werden, so dass beispielsweise Flüssigkeitsstand-Endschalter oder Regensensoren möglich sind.

Da die Diffusionskonzentration eines Mediums je nach den Gegebenheiten und Dimensionierungen mehr oder weniger vom Umgebungsdruck und/oder der Umgebungstemperatur abhängig sein kann, ist ein erfindungsgemäßer Sensor bei bekannten, unveränderten Randbedingungen oder bei deren messtechnischer Berücksichtigung auch als Drucksensor und/oder Temperatursensor einsetzbar.

Ein bevorzugter Einsatzbereich des erfindungsgemäßen Sensors ist als Feuchtesensor, wobei nach einfachen Kalibrierungsmaßnahmen die relative Luftfeuchte mit hoher Messgenauigkeit ermittelbar und messtechnisch erfassbar ist.

Um generell eine Temperaturabhängigkeit und/oder Druckabhängigkeit des Sensorsignals zu eliminieren kann dies durch die Anbringung eines Temperaturfühlers und/oder eines Druckfühlers im Sensorbereich vorzugsweise auf dem Träger erfolgen, wobei die entsprechenden Fühlersignale der Messeinrichtung als Korrekturgrößen für eine Eliminierung dieser Abhängigkeiten zugeführt werden.

Mit einer solchen Maßnahme kann gemäß Anspruch 9 ein Sensor als Feuchtesensor mit einer Korrekturgrößenaufschaltung zur Ermittlung der absoluten Luftfeuchte ausgebildet werden.

Anhand einer Zeichnung wird ein Ausführungsbeispiel der Erfindung erläutert.

Es zeigen:
- Fig. 1: eine schematische Darstellung eines Sensors mit Messeinrichtung und
- Fig. 2: einen Querschnitt durch einen kleinen Teilbereich eines Sensormaterials.

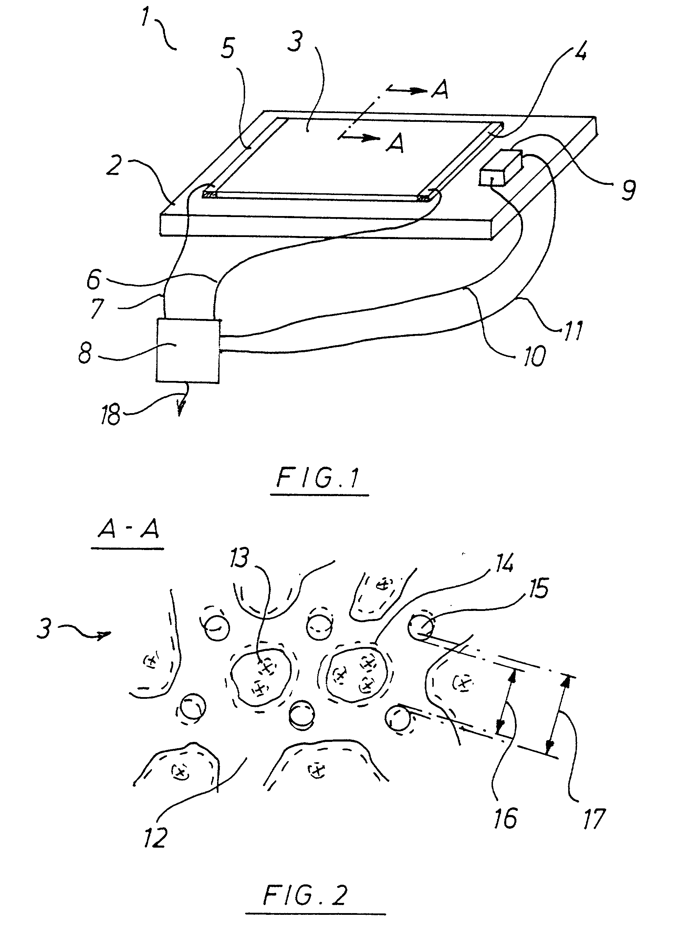

In Fig. 1 ist ein Sensor 1 beispielsweise als Feuchtesensor dargestellt. Auf einem elektrisch isolierenden Trägerplättchen 2 ist auf einem Teilbereich eine dünne Beschichtung aus einem Sensormaterial 3 aufgebracht. Diese Beschichtung ist jeweils randseitig gegenüberliegend durch elektrische Leiterbänder 4, 5 als elektrische Anschlüsse begrenzt. Diese Leiterbänder 4, 5 sind über elektrische Leitungen 6, 7 mit einer elektrischen Messeinrichtung 8 verbunden.

Auf dem Trägerplättchen 2 ist zudem ein schematisch dargestellter Temperaturfühler 9, beispielsweise ein Thermoelement angebracht, das über Leitungen 10, 11 ebenfalls mit der Messeinrichtung 8 verbunden ist. Ein Ausgangssignal (Pfeil 18) der Messeinrichtung 8 steht für weitere Verarbeitungen zur Verfügung.

Der Aufbau des Sensormaterials 3 ist schematisch und vereinfacht in Fig. 2 dargestellt. Das Sensormaterial besteht aus einem Bindemittel 12 welches nach der Beschichtung eine dreidimensionale offenporige, poröse oder spongiose Gitterstruktur ausbildet, in die ein auf die freie Fläche des Sensormaterials 3 einwirkendes externes gasförmiges oder flüssiges oder dampfförmiges Medium eindiffundieren kann. Solche eindiffundierten Mediumelemente 13 sind schematisch strichliert eingezeichnet. Bei Verwendung bestimmter Bindemittelmaterialien, wie beispielsweise von Kaseinen, Acrylaten oder Peptiden führt das Eindiffundieren der Mediumelemente 13 zu einer Gitterstrukturvergrößerung wie diese strichliert beispielsweise mit Bezugszeichen 14 eingezeichnet ist, die bei einer Abnahme des Eindiffusionsgrades wieder reversibel zurückgeht.

Im Bindemittelmaterial 12 sind zudem verteilt und gegebenenfalls teilweise aneinandergrenzende Graphitpartikel 15 eingebettet, die im wesentlichen die elektrischen Eigenschaften des Sensormaterials 3 bestehend aus dem Bindemittel 12 und den Graphitpartikeln 15 bestimmen. Ersichtlich werden bei einer Gitterstrukturvergrößerung 14 auch die Abstände der Graphitpartikel 15 größer und ändern sich von einem ursprünglichen Abstand 16 zu einem größeren Abstand 17. Zudem ergeben sich durch das Eindiffundieren der Mediumelemente 13 (nicht dargestellte) Verschiebungen in den Graphit-Gitterstrukturen. Dies führt insgesamt zu einer Änderung der elektrischen Eigenschaften des Sensormaterials 3, die abhängig ist vom Eindiffusionsgrad sind und die mit der Messeinrichtung 8 auswertbar ist. Für eine mögliche Umgebungstemperaturabhängigkeit der Gitterstrukturveränderung ist eine Messsignalkorrektur möglich, indem die mit dem Temperaturfühler 9 ermittelte Temperatur für eine Temperaturkompensation in der Messeinrichtung 8 verwendet wird.

In Fig. 2 ist eine weitgehend unregelmäßige Gitterstruktur dargestellt. Je nach verwendetem Bindemittelmaterial 12 kann auch eine weitgehend regelmäßige Gitterstruktur vorliegen, bei der die Graphitpartikel in der Art einer Dotierung statistisch verteilt vorliegen. Auch bei einem solchen Aufbau ist bei einem Eindiffundieren eines umgebenden Mediums der erfindungsgemäße Sensoreffekt erzielbar.

## Patentansprüche

1. Sensor zur Ermittlung der Anwesenheit oder der Konzentration eines im Sensorbereich anwesenden gasförmigen, flüssigen oder dampfförmigen Mediums und/oder für weitere physikalische Größen,
mit einem auf einen Träger (2) aus elektrisch isolierenden Material aufgebrachten Sensormaterial (3), welches aus einem im wesentlichen elektrisch isolierenden Bindemittelmaterial (12) und darin verteilt enthaltenen elektrisch leitenden Kohlenstoffpartikeln (15) besteht,
**dadurch gekennzeichnet,**
**dass** das Bindemittelmaterial (12) eine poröse Gitterstruktur für ein Eindiffundieren des gasförmigen oder flüssigen oder dampfförmigen Mediums (13) aufweist, mit einer von der Konzentration des eindiffundierten Mediums reversibel abhängigen Gitterstrukturvergrößerung oder Gitterstrukturverkleinerung, und
**dass** am Sensormaterial (3) zwei beabstandete elektrische Anschlüsse (4, 5) angebracht sind, die mit einer elektrischen Messeinrichtung (8) für einen elektrischen Widerstand und/oder eine elektrische Induktivität und/oder eine elektrische Kapazität zur Ermittlung eines Sensorsignals verbunden sind.

2. Sensor nach Anspruch 1, **dadurch gekennzeichnet,**
**dass** der Träger (2) eine ebene Fläche aufweist, auf der das Sensormaterial (3) als dünne Sensorschicht aufgetragen ist, und
**dass** die Sensorschicht randseitig, jeweils gegenüberliegend durch elektrische Leiterbänder (4, 5) als elektrische Anschlüsse begrenzt ist.

3. Sensor nach Anspruch 1 oder 2, **dadurch gekennzeichnet, dass** die Kohlenstoffpartikel Graphitpartikel (15) sind mit einer Partikelgröße von 5 µm bis 20 um.

4. Sensor nach einem der Ansprüche 1 bis 3, **dadurch gekennzeichnet, dass** als Bindemittel (12) Kaseine verwendet sind.

5. Sensor nach einem der Ansprüche 1 bis 3, **dadurch gekennzeichnet, dass** als Bindemittel (12) Acrylate verwendet sind.

6. Sensor nach einem der Ansprüche 1 bis 3, **dadurch gekennzeichnet, dass** als Bindemittel (12) Peptide verwendet sind.

7. Sensor nach einem der Ansprüche 1 bis 6, **dadurch gekennzeichnet, dass** der Sensor (1) als Füllstandssensor mit einem Teil seines Sensormaterials (3) unter einen Flüssigkeitsspiegel eintauchbar ist.

8. Sensor nach einem der Ansprüche 1 bis 7, **dadurch gekennzeichnet, dass** weiter ein Temperaturfühler (9) und/oder ein Druckfühler vorzugsweise auf dem Träger (2) angebracht sind, deren Fühlersignale ggf. der Messeinrichtung (8) als Korrekturgrößen für eine Eliminierung einer möglichen Temperaturabhängigkeit und/oder Druckabhängigkeit des Sensorsignals zugeführt werden.

9. Sensor nach Anspruch 8, **dadurch gekennzeichnet, dass** der Sensor (1) als Feuchtesensor mit einer Korrekturgrößenaufschaltung zur Ermittlung der absoluten Luftfeuchte ausgebildet ist.
